# EUROPEAN PATENT SPECIFICATION

(11) **EP 0 422 091 B1**
(45) Date of publication and mention of the grant of the patent: **15.03.1995**
(21) Application number: 89907781.2
(22) Date of filing: 26.06.1989
(51) Int. Cl.: G01M 17/04

(54) **METHOD AND APPARATUS FOR TESTING SHOCK ABSORBERS AND SUSPENSION SYSTEMS IN MOTOR VEHICLES**
METHODE UND GERÄT ZUM TESTEN VON STOSSDÄMPFERN UND FEDERUNGSSYSTEMEN VON FAHRZEUGEN
PROCEDE ET APPAREIL DE TEST DE SYSTEMES D'AMORTISSEURS ET DE SUSPENSIONS DANS DES VEHICULES AUTOMOBILES

(30) Priority: 25.06.1988 GB 8815167
(43) Date of publication of application: 17.04.1991
(73) Proprietor: BUCHANAN, Nigel Alexander, By Leven, KY8 5TF Fife, Scotland (GB)
(72) Inventor: BUCHANAN, Nigel Alexander, By Leven, KY8 5TF Fife, Scotland (GB)
(74) Representative: Moreland, David, Dr.
(86) International application number: GB8900709
(87) International publication number: WO8912811

(56) References cited:
- EP-A- 0 226 981
- US-A- 3 857 276
- US-A- 4 376 387

## Description

The present invention relates to a method and apparatus for testing shock absorbers and suspension systems in motor vehicles, especially in motor cars and light commercial vehicles.

For safety reasons, it is necessary for the suspension systems of motor vehicles to be in acceptable order, and this applies particularly to the condition of the shock absorbers or dampers in the suspension system. Shock absorbers fitted to motor cars and light-vans usually have a life expectancy of around 35 000 miles (56 000 KM). At present, without removing the shock absorber from the vehicle and testing it on a special testing machine it can be difficult to assess the condition of the shock absorber. Of course, if the item is leaking or has an obvious mechanical defect then the need for replacement will be very apparent, but otherwise the assessment of the shock absorbers' condition can be a rather arbitrary affair.

Methods and apparatus have been proposed to enable the condition of motor vehicle shock absorbers to be assessed without the need for removal of the shock absorbers from the vehicle. Thus, EP-A-0226981 includes a movable drive-on support for a car wheel with a ramp to enable the wheel to be placed on the support, and means for rapid removal of the support whereby the wheel (and vehicle bodywork) is caused to move with a free fall from an elevated position onto a load sensitive base plate; the arrangement is such that a time curve can be prepared of the force acting on the base-plate after engagement of the free-falling vehicle with the plate and from this time curve the condition of the vehicle shock absorbers and suspension can be assessed. In a further arrangement, shown in U.S.-A-3857276 the wheel support falls with the wheel for this test and a further differece of this arrangement is that the movement of the vehicle bodywork over time relative to some datum is measured by means of an electronic sensing apparatus involving a mechanical connection to the vehicle bodywork to assess the condition of the vehicle shock absorbers and suspension system. In a specific example relative movement between the bodywork and a wheel is measured.

It is an object of the present invention to provide a method and apparatus for testing the shock absorbers and suspension systems of vehicles giving more accurate and effective results.

According to one aspect of the present invention a method of testing a shock absorber and suspension system while in situ in a motor vehicle is in accordance with the attached claim 1.

The asessment is preferably done utilising computer apparatus enabling the assessed characteristic to be displayed on a monitor screen and/or set out on a computer print out, the computer apparatus preferably including memory storage means for the corressponding characteristics of a range of vehicles having one new or as new shock absorbers and suspension systems to facilitate comparison with the assessed characteristic.

Preferably the relative motion is assessed by an electronic scanning operation of the indicator element on the wheel and the associated indicator element on the bodywork.

According to another aspect of the present invention apparatus for use in testing a shock absorber and suspenion system of a motor vehicle is in accordance with appended claim 6.

Preferably the electronic sensing means comprises an electronic scanner, such as a laser scanner, scanning the indicator elements mounted on the wheel and the vehicle bodywork respectively, sensed indications from these elements preferably being fed to computer apparatus for the provision of said sensed characteristic. The computer apparatu preferably includes a monitor screen and/or a print out for display of the sensed characteristic.

Preferably further, the computer apparatus includes memory storage means for the corresponding characteristics of a suitable range of motor vehicles having new or as new shock absorbers and suspension system to facilitate comparison with the sensed characteristic.

An embodiment of the present invention will now be described by way of example with reference to the accompanying drawings wherein:
Fig. 1 shows a schematic view of apparatus for testing the shock absorbers and/or the suspension system of a motor vehicle, according to the present invention;
Fig. 2 shows the laser scanner of the apparatus of Fig. 1 to a larger scale;
Fig. 3 shows the rotary prismatic beam generator of the scanner;
Fig. 4 is a graph of the scanning action with regard to a pair of indicating elements on the vehicle wheel and bodywork respectively;
Fig. 5 shows a typical curve produced by the apparatus of Fig. 1 for a test carried out on a vehicle, and
Figs 6A - 6D represent stages in the test of the shock absorbers and suspension system of a motor vehicle.

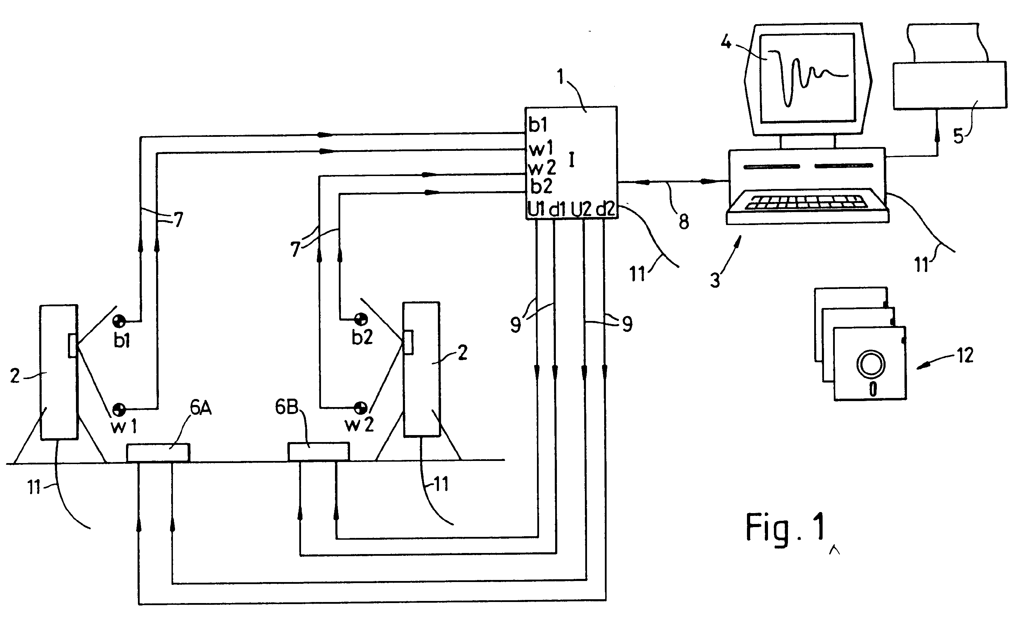

Referring to the drawings, especially Fig. 1, testing apparatus for testing the condition of shock absorbers and suspension systems in motor vehicles (especially motor cars and light vans) comprises an interface unit 1, indicating elements (sensors) b1, W1/b2, W2, a pair of laser beam generators 2, a computer 3 including a monitor screen 4 and a printer 5, and lifter devices 6A, 6B each adapted to raise a respective wheel 15 of a pair of opposed wheels (i.e front or back) of the vehicle.

Each indicating element W1, W2 is adapted for fitting on a respective vehicle wheel at a set position, specifically at the wheel centre, while the corresponding elements b1, b2 are fitted at a set position on the vehicle bodywork 16 for example on the wheel arch above the relevant wheel element W1, W2. The indicating elements b1, W1/b2, W2 are connected to the interface unit 1 by leads 7, whereby signal pulses are fed to the unit 1 from the indicating elements, and it is the principal object of the unit 1 to determine these signal pulses so as to produce a computed output signal representing the motion relationship between a vehicle wheel and the vehicle bodywork. The output signal is fed to the computer 3 via lead 8. The unit 1 additionally includes controls U1, U2 for raising the devices 6A, 6B and also controls d1 d2 to enable the devices 6A, 6B to be lowered, the control arrangement enabling precise positioning and movement of the devices 6A, 6B. Leads 9 connects the controls U1, U2, D1, D2 to the devices 6A, 6B.

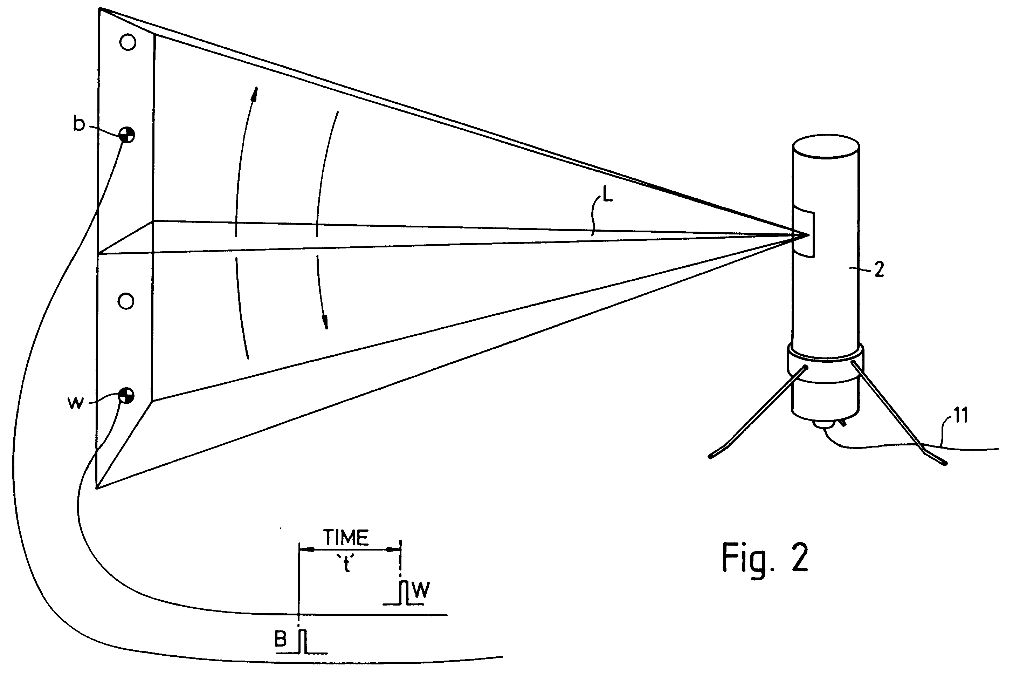

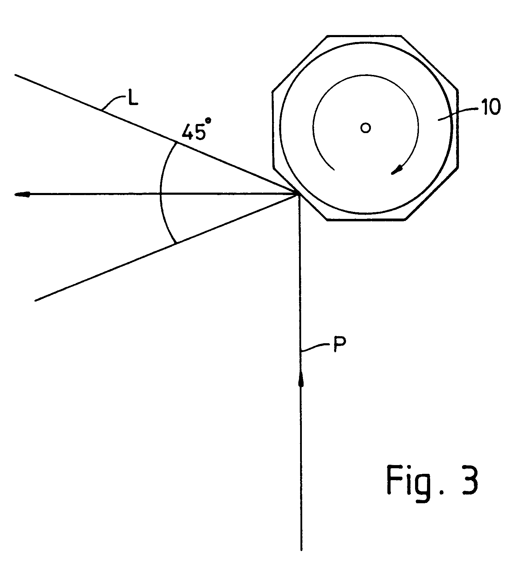

Each laser beam generator 2 provides a vertically oscillating laser beam L as is shown in Fig. 2, which L impinges on the relevant indicators W, b, during the beams' oscillations. The generator 2 is set to give an oscillating beam of precise period and to this end the generator 2 can include for example a rotary polygonal element 10 (Fig. 3) which converts a primary beam P into the desired oscillating laser beam L. By way of example the element 10 could have eight sides and a suitable rotational speed, such as for example 750 RPM (for 100 oscillations per second) or greater. The unit 1, the laser generators 2, and the computer 3 are connected to a suitable electric power source, e.g. the mains supply, by leads 11. Further, a data storage memory 12 is provided for the computer 3 which memory 12 includes pre-recorded data of selected characteristics as will be discussed later of shock absorbers and suspension systems of a range of motor vehicles in the new or as new condition.

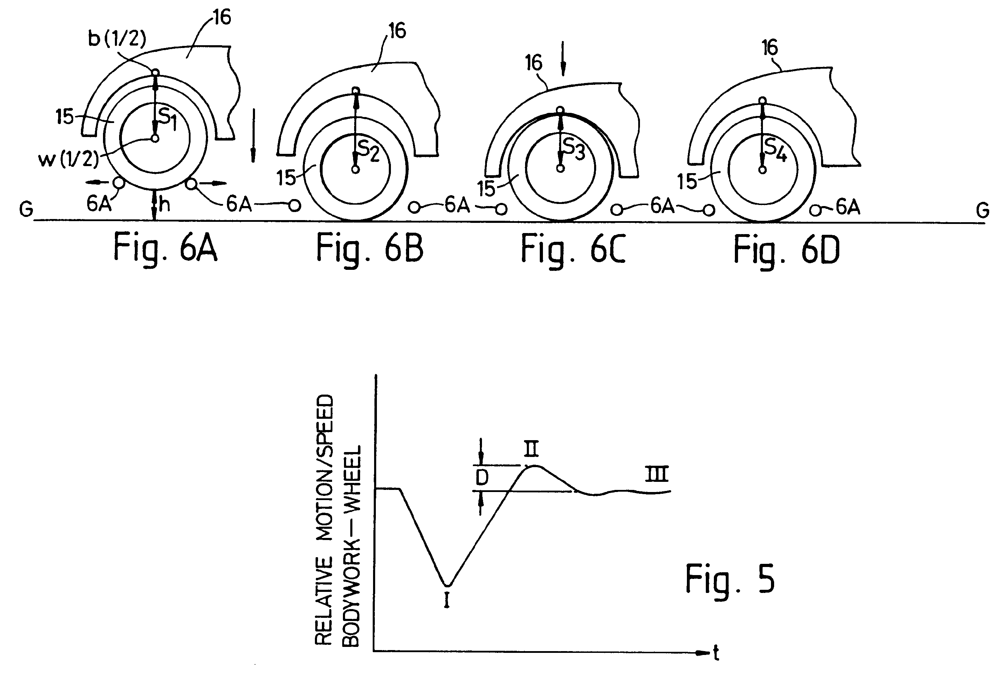

In the testing procedure it is an object to achieve a relative motion effect between the wheels and the bodywork which approximately simulates the motion when wheels encounter pot-holes during normal driving as this is the situation which presents greatest demands on the shock absorbers. Thus to test shock absorbers and/or the suspension system of the vehicle, the vehicle is positioned with a pair of its opposed roadwheels e.g. the front wheels (Fig. 6A) over the lifting devices 6A, 6B. The lifting devices 6A, 6B are actuated by the controls on the unit 1, specifically control items U1/U2 to raise the opposed wheels (and the bodywork) by a specified amount h above the initial surface level G: the situation is now as in Fig. 6A with the bodywork indicating element b located at distance S above the corresponding indicating element w at the wheel. With the laser beam generators 2 providing oscillating laser beams L scanning the elements w, b of the opposed vehicles wheels and with the unit 1 operatively coupled to the computer 3, the next stage in the test is to remove the devices 6A, 6B from supportive engagement with the wheels and this is preferably achieved by means of power actuation (down and sideways as shown in Figs. 6A and 6B) so that the wheels are permitted to fall without obstruction onto the surface G. In the dropping action, the wheels will move away relatively from the bodywork by virtue of suspension spring action so that when the wheels engage the surface G as in Fig. 6B the spacing S₂ between the elements b, w is greater than S₁. The bodywork which continues to fall after Fig. 6B will compress the suspension spring under damper action until the "bottom" position shown in Fig. 6C is reached where S₃ is now less than S₁. Oscillation of the bodywork will then follow until the steady state condition as shown in Fig. 6D is obtained when S₄ substantially equals S₁.

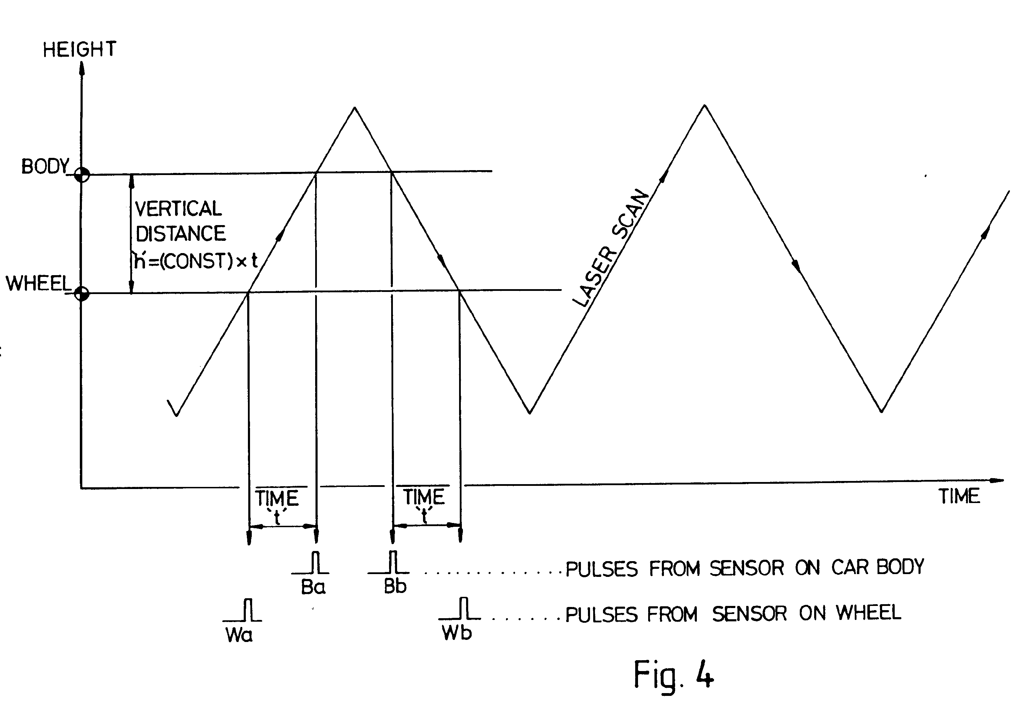

Fig. 4 shows the operation of the scan by each oscillating beam L. Thus each time the beam L passes a wheel indicator w(1/2) a signal pulse is generated i.e. pulses Wₐ, W_{b} and similarly signal pulses Bₐ, B_{b} are produced by the bodywork indicators. The various signal pulses Wₐ Bₐ are fed to the interface unit 1 where they are determined to assess the vertical motion and speed of the bodywork relative to the associated wheel: this is a factor represented by the changing period between successive wheel/body pulses Wₐbₐ, W_{b}b_{b} etc.

An output signal representing the instantaneous relative speed or motion value is fed to the computer 3 from the unit 1 via lead 8 and the computer 3 functions to present overall characteristic of bodywork motion (relative to the wheel). This characteristic can be displayed on the monitor screen 4 and/or printed on printer 5. Fig. 5 represents a typical graph of the relative motion (against time) as would be displayed on the screen 4 or printed out on printer 5. Thus, the first inversion I in Fig. 5 represents the situation in Fig. 6B where the indicator spacing (S₂) is greatest. Inversion II represents the Fig. 6C position, the degree of overshoot D indicating the compression created in the suspension spring by the dropping bodywork. The graph also indicates the bodywork oscillation after II until the steady state condition at III (equivalent to the Fig. 6D situation) is reached. Any weak spot of the shock absorber is shown as a blip or extended movement on the waveform, while wear of suspension parts will be indicated by waveform distortion at waveform limits i.e. at I, II etc.

The testing apparatus can function to provide an instantaneous but separate motion characteristic for each of the opposed wheels (i.e. with respect to sensors w, b and w₂ b₂). Also, a similar test will be carried on the other wheel pair i.e. the rear wheels.

A significant feature of the present invention lies in the prior carrying out of equivalent tests on vehicles (i.e. "new" vehicles) having their shock absorbers and suspension systems in correct order. The characteristics (e.g. graphs) obtained from these prior tests are stored in the computer memory 12, so that data can be readily drawn from the memory 12 to enable a comparison of the tested characteristic of a particular vehicle model with the correct characteristic for that model. This comparison should make it readily evident where a shock absorber requires replacement, or where the suspension system requires attention.

The memory 12 can be readily up-dated to include the necessary data on additional motor vehicle models.

The following benefits accrue to the customer and to the garage from the above tester according to the present invention:
- The Customer: - Will not have to rely only on the word or advice of the mechanic or fitter (who apart from the mileage has no "accurate" indication of wear). As the customer is shown the car on test and the results afterwards, he has a clear indication of any need for replacement.
- The Garage: - Will have much needed credibility created by the accuracy associated with lasers and the veracity of computers. He will have a much better relationship with his customer if he only replaces parts which are not only worn but are seen to be worn.

Modifications are of course possible. For example, the sensing of wheel motion could be achieved by some other sensing apparatus than the laser generator 2 and indicating elements W, b as shown in Fig. 2. Also, different means could be used for raising the wheels and bodywork, and these may be applied on the bodywork rather than on a wheel or wheels.

## Claims

1. A method of testing a shock absorber and suspension system while in situ in a motor vehicle, the method comprising raising a wheel (15) and the bodywork (16) or chassis of a motor vehicle under test from a ground engaging position to a raised position by means of a lifting device (6A, 6B) in supportive engagement with a wheel, moving the lifting device (6a, 6B) away from the wheel to allow the wheel to return to the ground engaging position under free fall whereby relative vertical motion occurs between the wheel (15) and the bodywork (16) during the fall, characterised in that a characteristic of relative motion between the bodywork (16) or chassis and the wheel (15) is assessed utilizing electronic means, the electronic means sensing the relative movement between a first indicator element (B₁, B₂) placed on the bodywork (16) or chassis and a second indicator element (W₁, W₂) located on the wheel (15), by means of a sensing beam which interacts with said indicator elements (B_{1/2}, W_{1/2}) said second indicator element (W₁, W₂) being fitted at the centre of the wheel so that rotation of the wheel does not affect the distance between said first and second indicator elements (B_{1/2}, W_{1/2}) noting the assessed characteristic, and comparing the assessed characteristic with a corresponding characteristic obtained for the motor vehicle type having new or as new shock absorbers and suspension system whereby the condition of the shock absorber and suspension system of the tested vehicle is established.

2. A method according to claim 1, characterised in that the assessment is achived utilizing a computer apparatus (3) enabling the assessed characteristic to be displayed on any one of a monitor screen (4) and a computer printout (5).

3. A method according to claim 2, characterised in that the computer apparatus (3) includes memory storage means for the corresponding characteristics of a range of vehicles having new or as new shock absorbers and suspension systems to facilitate comparing the assessed characteristics with the corresponding characteristics.

4. A method according to claim 1, characterised in that the relative motion is assessed by an electronic scanning operation involving the issuance of an oscillating sensing beam which impinges on the indicator elements (B_{1/2}, W_{1/2}).

5. An apparatus for use in testing a shock absorber and suspension system of a motor vehicla comprising means for causing relative vertical motion between a wheel (15) and a bodywork (16) or chassis of a motor vehicle, the relative motion creating means comprising lifting means (6A, 6B) engaging the wheel (15) for raising the wheel (15) together with the bodywork (16) by a predetermined amount from a ground engaging position, the lifting means (6A, 6B) being movable away from the wheel (15) for release of the wheel (15) at the raised position to permit a free fall of the wheel (15) and bodywork (16) sensing means (2) for sensing a parameter of relative motion of the vehicle as a consequence of the fall including means for noting the sensed characteristic, and comparison means (1) for comparing the sensed characteristic with a corresponding characteristic obtained for the motor vehicle type when it has new or as new shock absorbers and suspension system whereby the condition of the shock absorber and suspension system of the tested vehicle is established, characterised in that the sensing means comprises electronic means including first and second indicator elements (B_{1/2}, W_{1/2}), said electronic sensing means (2) generating a sensing beam which interacts with said indicator elements (B_{1/2}, W_{1/2}) for sensing the relative motion of said elements (B_{1/2}, W_{1/2}), said first indicator elements (B_{1/2}) being fitted on the vehicle body (16) and said second indicator element (W_{1/2}) being fitted on the wheel (15) whereby the sensing means (2) senses the relative motion between the bodywork (16) and the wheel (15), said second indicator elements (W_{1/2}) being fitted at the centre of the wheel (15) enabling the wheel (15) to rotate without affecting the distance between said first and second indicator elements (B_{1/2}, W_{1/2}).

6. Apparatus according to claim 5, characterised in that the electronic sensing means (2) comprises an electronic scanner for sensing the indicator elements (W_{1/2}, B_{1/2}) mounted on the wheel (15) and the vehicle bodywork (16) respectively.

7. Apparatus according to claim 6, characterised in that the electronic scanner is a laser scanner.

8. Apparatus according to claim 6, characterised in that sensed indications from the scanning indicator elements are fed to computer apparatus (3), for the provision of the sensed characteristic.

9. Apparatus according to claim 8, characterised in that the computer apparatus (3) includes any one of a monitor screen (4) and a print out (5) for display of the sensed characteristic.

10. Apparatus according to claim 9 characterised in that the computer apparatus (3) includes memory storage means for the corresponding characteristics of a suitable range of motor vehicles having new or as new shock absorbrs and suspension system to facilitate comparison with the sensed characteristic.

## Patentansprüche

1. Verfahren zum Prüfen eines Systems aus Stoßdämpfer und Aufhängung an einem Motorfahrzeug durch Anheben eines Rades (15) und der Karosserie (16) oder des Chassis eines in der Prüfung befindlichen Motorfahrzeugs aus einer Lage, in der es den Boden berührt, in eine angehobene Lage mittels einer Hebevorrichtung (6A, 6B), welche ein Rad unterstützt, Wegbewegen der Hebevorrichtung (6A, 6B) vom Rad, so dass dieses in freiem Fall in seine Lage mit Bodenberührung zurückkehren kann, wobei während des Falles eine senkrechte Relativbewegung zwischen dem Rad (15) und der Karosserie (16) auftritt,
**dadurch gekennzeichnet,** dass mit Hilfe von elektronischen Mitteln ein Kennmerkmal der Relativbewegung zwischen der Karosserie (16) oder dem Chassis und dem Rad (15) ermittelt wird, wobei die elektronischen Mittel die Relativbewegung zwischen einem ersten Anzeigeelement (B₁, B₂),
welches an der Karosserie (16) oder dem Chassis angebracht ist, und einem zweiten Anzeigeelement (W₁, W₂), welches am Rad (15) angebracht ist, mit Hilfe eines Abtaststrahls erfassen, welcher mit den Anzeigeelementen (B_{1/2}, W_{1/2}) in Wechselwirkung steht, wobei das zweite Anzeigeelement (W₁, W₂) in der Mitte des Rades angebracht ist, so dass die Raddrehung den Abstand zwischen dem ersten und dem zweiten Anzeigeelement (B_{1/2},W_{1/2}) nicht beeinflußt,
Aufzeichnen des ermittelten Kennmerkmals und Vergleichen des ermittelten Kennmerkmals mit einem entsprechenden, für den Motorfahrzeugtyp mit neuem oder so gut wie neuem System aus Stoßdämpfern und Aufhängung erhaltenen Kennmerkmal, wodurch der Zustand des Systems aus Stoßdämpfer und Aufhängung des geprüften Fahrzeugs festgestellt wird.

2. Verfahren nach Anspruch 1, **dadurch gekennzeichnet,** dass das Kennmerkmal mit Hilfe eines Rechners (3) ermittelt wird, der es möglich macht, das ermittelte Kennmerkmal sowohl auf einem Bildschirm (4) als auch auf einem Computerausdruck (5) darzustellen.

3. Verfahren nach Anspruch 2, **dadurch gekennzeichnet,** dass für den Rechner (3) Speichermittel für die entsprechenden Kennmerkmale einer Anzahl von Fahrzeugen mit neuen oder so gut wie neuen Stoßdämpfern und Aufhängungen vorgesehen sind, um den Vergleich der ermittelten Kennmerkmale mit den entsprechenden Kennmerkmalen zu erleichtern.

4. Verfahren nach Anspruch 1, **dadurch gekennzeichnet,** dass die Relativbewegung mittels eines elektronischen Abtastvorgangs ermittelt wird, der das Aussenden eines hin- und herschwingenden Abtaststrahls einschließt, welcher auf die Anzeigeelemente (B_{1/2}, W_{1/2}) trifft.

5. Vorrichtung zur Verwendung beim Prüfen eines Systems aus Stoßdämpfer und Aufhängung eines Motorfahrzeugs mit Mitteln zum Erzeugen einer senkrechten Relativbewegung zwischen einem Rad (15) und einer Karosserie (16) oder einem Chassis eines Motorfahrzeugs, wobei die Mittel zum Erzeugen der Relativbewegung am Rad (15) angreifende Mittel (6A, 6B) zum Anheben des Rades (15) zusammen mit der Karosserie (16) um eine vorgegebene Höhe über den Boden umfassen und die Hebemittel (6A, 6B) zum Freigeben des Rades (15) in der angehobenen Lage vom Rad (15) wegbewegbar sind, um einen freien Fall des Rades (15) und der Karosserie (16) zu ermöglichen,
mit Sensormitteln (2) zum Erfassen eines Parameters der Relativbewegung des Fahrzeugs infolge des Falles einschließlich Mitteln zum Aufzeichnen des erfaßten Kennmerkmals, und mit Mitteln zum Vergleichen des erfaßten Kennmerkmals mit einem korrespondierenden Kennmerkmal, welches für den Motorfahrzeugtyp mit neuen oder so gut wie neuen Stoßdämpfern und Aufhängungen erhalten wurde, wodurch der Zustand des Systems aus Stoßdämpfer und Aufhängung des geprüften Fahrzeuges festgestellt wird,
**dadurch gekennzeichnet,** dass die Sensormittel elektronische Mittel einschließlich erster und zweiter Anzeigeelemente (B_{1/2}, W_{1/2} ) umfassen, wobei die elektronischen Sensormittel (2) einen Abtaststrahl erzeugen, der mit den Anzeigeelementen (B_{1/}₂, W_{1/2} ) in Wechselwirkung tritt, um die Relativbewegung dieser Anzeigeelemente (B_{1/2} , W_{1/2} ) zu erfassen,
dass die ersten Anzeigeelemente (B_{1/2} ) an der Fahrzeugkarosserie (16) und die zweiten Anzeigeelemente (W_{1/2}) am Rad (15) angebracht sind, wodurch die Sensormittel (2) die Relativbewegung zwischen der Karosserie (16) und dem Rad (15) erfassen, wobei die zweiten Anzeigeelemente (W_{1/2} ) in der Mitte des Rades (15) angebracht sind, so dass das Rad (15) sich drehen kann, ohne den Abstand zwischen den ersten und zweiten Anzeigeelementen (B_{1/2} , W_{1/2} ) zu beeinflussen.

6. Vorrichtung nach Anspruch 5, **dadurch gekennzeichnet,** dass die elektronischen Sensormittel (2) einen elektronischen Abtaster enthalten, der die Anzeigeelemente (W_{1/2}, B_{1/2}) abtastet, welche auf dem Rad (15) bzw. an der Karosserie (16) des Fahrzeugs angebracht sind.

7. Vorrichtung nach Anspruch 6, **dadurch gekennzeichnet,** dass der elektronische Abtaster ein Laser-Abtaster ist.

8. Vorrichtung nach Anspruch 6, **dadurch gekennzeichnet,** dass von den abgetasteten Anzeigeelementen erfaßte Anzeigen einem Rechner (3) zugeführt werden, um das erfaßte Kennmerkmal bereitzustellen.

9. Vorrichtung nach Anspruch 8, **dadurch gekennzeichnet,** dass der Rechner (3) einen Bildschirm (4) und einen Drucker (5) zum Darstellen des erfaßten Kennmerkmals aufweist.

10. Vorrichtung nach Anspruch 9, **dadurch gekennzeichnet,** dass der Rechner (3) für die entsprechenden Kennmerkmale einer geeigneten Gruppe von Motorfahrzeugen mit neuen oder so gut wie neuen Stoßdämpfern und Aufhängungen Speichermitteln hat, um den Vergleich mit dem erfaßten Kennmerkmal zu erleichtern.

## Revendications

1. Procédé pour tester un système de suspension et d'amortissement d'un véhicule à moteur in situ, le procédé comprenant l'élévation d'une roue (15) et de la carrosserie (16) ou du châssis d'un véhicule à moteur en train d'être testé, depuis le sol jusqu'à une position en hauteur au moyen d'un dispositif de levage (6A, 6B) qui supporte une roue, l'enlèvement du dispositif de levage (6A, 6B) de sous la roue pour permettre à celle-ci de retourner vers le sol en chute libre, de telle sorte qu'il se produit un mouvement vertical relatif entre la roue (15) et la carrosserie (16) durant la chute,
caractérisé en ce qu'on établit, à l'aide de moyens électroniques, une caractéristique du mouvement relatif entre la carrosserie (16) ou le châssis et la roue (15), lesdits moyens électroniques détectant le mouvement relatif entre un premier élément indicateur (B₁, B₂) placé sur la carrosserie (16) ou le châssis et un second élément indicateur (W₁, W₂) situé sur la roue (15), au moyen d'un faisceau sensible qui interagit avec lesdits éléments indicateurs (B_{1/2}, W_{1/2}), ledit second élément indicateur (W₁, W₂) équipant le centre de la roue, de telle manière que la rotation de celle-ci n'affecte pas la distance entre lesdits premier et second éléments indicateurs (B_{1/2}, W_{1/2}) établissant la caractéristique, puis on compare la caractéristique établie avec une caractéristique correspondante obtenue pour un véhicule à moteur de ce type doté d'un système de suspension et d'amortissement neuf ou comme neuf, de telle sorte que l'état du système de suspension ou d'amortissement du véhicule testé est établi.

2. Procédé selon la revendication 1, caractérisé en ce que l'établissement de la courbe est réalisé en utilisant un ordinateur (3) permettant la visualisation de ladite courbe sur n'importe quel type d'écran de moniteur (4) et sur une imprimante d'ordinateur (5).

3. Procédé selon la revendication 2, caractérisé en ce que l'ordinateur (3) est muni d'une mémoire de stockage pour les caractéristiques correspondantes d'un certain nombre de véhicules ayant des systèmes de suspension et d'amortissement neufs ou comme neufs, afin de faciliter la comparaison avec la courbe déterminée.

4. Procédé selon la revendication 1, caractérisé en ce que le mouvement relatif est déterminé par une opération de balayage électronique nécessitant la délivrance d'un faisceau sensitif oscillant qui vient frapper les éléments indicateurs (B_{1/2}, W_{1/2}).

5. Dispositif pour tester un système de suspension et d'amortissement d'un véhicule à moteur comprenant des moyens pour réaliser un mouvement vertical relatif entre une roue (15) et une carrosserie (16) ou un châssis d'un véhicule à moteur, lesdits moyens comprenant des moyens de levage (6A, 6B) de la roue (15) pour élever ladite roue (15) en même temps que la carrosserie (16) d'une valeur prédéterminée à partir du sol, les moyens de levage (6A, 6B) étant enlevables de dessous la roue (15) pour libérer celle-ci à partir de la position haute afin de permettre une chute libre de la roue (15) et de la carrosserie (16), des moyens de détection (2) pour mesurer des paramètres du mouvement relatif du véhicule à la suite de la chute, incluant des moyens pour noter la caractéristique mesurée, et des moyens de comparaison (1) pour comparer ladite caractéristique avec une caractéristique correspondante obtenue pour un véhicule à moteur du même type qui est doté d'un système de suspension et d'amortissement neuf ou comme neuf, de telle sorte que l'état du système de suspension ou d'amortissement du véhicule testé puisse être établi, caractérisé en ce que les moyens de détection comprennent des moyens électroniques incluant des premiers et des seconds éléments indicateurs (B_{1/2}, W_{1/2}), lesdits moyens électroniques de détection (2) générant un faisceau sensible qui interagit avec lesdits éléments indicateurs (B_{1/2}, W_{1/2}) pour mesurer le mouvement relatif desdits éléments, lesdits premiers éléments indicateurs (B_{1/2}) équipant la carrosserie du véhicule (16) et lesdits seconds éléments indicateurs (W_{1/2}) équipant la roue (15), de telle sorte que les moyens de détection (2) mesurent le mouvement relatif entre la carrosserie (16) et la roue (15), lesdits seconds éléments indicateurs (W_{1/2}) équipant le centre de la roue (15) pour permettre à celle-ci de tourner sans affecter la distance entre lesdits premiers et seconds éléments indicateurs (B_{1/2}, W_{1/2}).

6. Dispositif selon la revendication 5, caractérisé en ce que les moyens capteurs électroniques (2) comprennent un scanner électronique pour effectuer les mesures sur les éléments indicateurs (W_{1/2}, B_{1/2}) montés sur la roue (15) et la carrosserie du véhicule (16).

7. Dispositif selon la revendication 6, caractérisé en ce que le scanner électronique est un scanner à laser.

8. Dispositif selon la revendication 6, caractérisé en ce que les indications obtenues par les éléments indicateurs du scannage sont envoyées vers un ordinateur (3) pour l'établissement de la caractéristique obtenue.

9. Dispositif selon la revendication 8, caractérisé en ce que l'ordinateur (3) comprend un écran de moniteur (4) et un dispositif d'impression (5) pour visualiser la caractéristique obtenue.

10. Dispositif selon la revendication 9, caractérisé en ce que l'ordinateur (3) comprend des moyens de stockage pour un nombre convenable de caractéristiques correspondantes pour des véhicules à moteur ayant des systèmes de suspension et d'amortissement neufs ou comme neufs afin de faciliter la comparaison avec la caractéristique obtenue.
